(19) Europäisches Patentamt
European Patent Office
Office européen des brevets

(11) **EP 4 250 200 A1**

(12) **EUROPEAN PATENT APPLICATION**

(43) Date of publication:
**27.09.2023 Bulletin 2023/39**

(21) Application number: **22305356.2**

(22) Date of filing: **24.03.2022**

(51) International Patent Classification (IPC):
***G06Q 10/08*** *(2023.01)*

(52) Cooperative Patent Classification (CPC):
**G06Q 10/087**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TotalEnergies OneTech**
**92400 Courbevoie (FR)**

(72) Inventors:
• **GOURVENEC, Sébastien**
**91410 ROINVILLE (FR)**
• **LELUC, Rémi**
**75008 PARIS (FR)**

(74) Representative: **Lavoix**
**2, place d'Estienne d'Orves**
**75441 Paris Cedex 09 (FR)**

(54) **A METHOD FOR INVENTORY MANAGEMENT**

(57) The invention relates to a method for inventory management of different types of products in a storage space, each type of product being associated with a state at each time, the state of each type of product being modified at each time by an action consisting in ordering a quantity of said type of product, the method comprising the following steps:
- obtaining a training database,
- training a control model for determining at each time an ordered quantity for each type of product depending on the state of each type of product, the control model being trained in a training environment on the basis of the training database so as to maximize a reward function for each cluster, and
- operating the control model.

$$E \quad \xrightarrow{(R_t^{(1)}, ..., R_t^{(k)})} \quad M \quad \longrightarrow (a_t^{(1)}, ..., a_t^{(n)})$$

$$(s_t^{(1)}, ..., s_t^{(n)})$$

$$t+1 \leftarrow t$$

**FIG.3**

**Description**

TECHNICAL FIELD OF THE INVENTION

The present invention concerns a method for inventory management of different types of products in a storage space. The present invention also concerns an associated computer program product. The present invention also relates to an associated readable information carrier.

BACKGROUND OF THE INVENTION

Inventory control is one of the major problems in the supply chain industry. The main goal is to ensure the right balance between the supply and demand of products by optimizing replenishment decisions. More precisely, a controller observes the past demands and local information of the inventory and has to decide about the next ordering values. Accurate inventory management is key to running a successful product business with benefits ranging from better inventory accuracy and insights to cost savings and avoidance of shortage and stock overflows.

The main issue of the supply chain is the environment uncertainty. In an ideal world with deterministic demand and lead-times, an inventory controller would be able to place a perfect order equal to the demand size at the right time. However, in practice, both the demands and lead-times are stochastic with potentially high volatility, making the inventory management problem hard to solve. In most cases, the inventory controller may exceedingly or insufficiently order. The former case leads to paying unnecessary ordering and holding costs while the latter results in shortage costs which may jeopardize the company's performance.

Classical methods for solving the inventory management problem rely on basic heuristics due to the complexity of the mathematical modeling of the inventory system. While these approaches are easy to implement, they are not able to capture the randomness of the demand and lead-times.

Another way of solving the inventory management problem is dynamic programming. Despite being efficient, this technique requires exact knowledge of the mathematical model of the inventory system, which becomes intractable for big companies with very large inventories. Inventory management models can quickly become too complex and time-consuming, leading to unworkable models. To escape this curse of dimensionality, one may apply approximate dynamic programming which performs well in specific settings at the cost of strong assumptions and simplifications.

SUMMARY OF THE INVENTION

There exists a need for a method enabling to perform the inventory management of products in a more precise way to reduce the inventory costs.

To this end, the invention relates to a method for inventory management of different types of products in a storage space, the types of products being classified into M different clusters corresponding to different storage subspaces of the storage space, each cluster comprising at least one type of product, each storage subspace having a maximum storage capacity, each type of product being associated with a state at each time, the state of each type of product being modified at each time by an action consisting in ordering a quantity of said type of product, each ordered quantity being received after a lead-time, each state of a type of product comprising at least an inventory level and a demand quantity, the inventory level being the on-hand inventory of the considered type of product at time, the demand quantity being the quantity of the considered type of product in demand, the method comprising the following steps which are computer-implemented:

- obtaining a training database comprising, for each type of product, an initial inventory level, a demand quantity for each time and a lead-time associated to an ordered quantity at said time,
- training a control model for determining at each time an ordered quantity for each type of product depending on the state of each type of product, the control model being trained in a training environment on the basis of the training database so as to maximize a reward function for each cluster, the training environment being a reinforcement learning environment with an agent for each type of product, each reward function being relative to inventory costs, and
- operating the control model in order to determine at each time an ordered quantity for each type of product of the storage space, following the reception by the control model, of the current state of each type of product.

The method according to the invention may comprise one or more of the following features considered alone or in any combination that is technically possible:

- each state of a type of product comprises also a backlog level and a replenishment quantity, the backlog level being an unavailable quantity of the considered type of product when demand exceeds the available inventory level, the replenishment quantity being a quantity of the considered type of product that will be added to the inventory level when the inventory check is done at the next time, the replenishment quantity depending on the previous ordered quantity for said type of product and their corresponding lead-time;

- during the training step and the operating step, the inventory level for each type of product at the next time is computed as a function of the corresponding previous inventory level, of the corresponding previous demand quantity, and of the corresponding previous replenishment quantity, the backlog level for each type of product at the next time being computed as a function of the corresponding previous backlog level, of the corresponding previous inventory level, of the corresponding previous demand quantity and of the corresponding previous replenishment quantity;

- during the training step and the operating step, a temporary inventory level is calculated at each time, for each type of product, as a function of the replenishment quantity at said time and of the inventory level at said time, for each cluster, when the sum of the temporary inventory levels of the corresponding types of products is superior to the maximum storage capacity of said cluster which causes a storage overflow, an overflow weight is affected to the replenishment quantity of each type of product during computation of the inventory level at the next time and during computation of the backlog level at the next time;

- the inventory level and the backlog level for each type of product at the next time are given by the following formula:

$$x_{t+1}^{(i)} = \max[(x_t^{(i)} + \left\lfloor w_t^{(i)} \rho_t^{(i)} \right\rfloor - \delta_t^{(i)}) \, ; 0]$$

$$\beta_{t+1}^{(i)} = \beta_t^{(i)} - \min[(x_t^{(i)} + \left\lfloor w_t^{(i)} \rho_t^{(i)} \right\rfloor - \delta_t^{(i)}) \, ; \, 0]$$

Where:

- $x_{t+1}^{(i)}$ is the inventory level of the type of product i at time t+1,
- $x_t^{(i)}$ is the inventory level of the type of product i at time t,
- $w_t^{(i)}$ is the overflow weight affected to the replenishment quantity $\rho_t^{(i)}$,
- $\rho_t^{(i)}$ is the replenishment quantity of the type of product i at time t,
- $\delta_t^{(i)}$ is the demand quantity of the type of product i at time t,
- $\beta_{t+1}^{(i)}$ is the backlog level of the type of product i at time t+1,
- $\beta_t^{(i)}$ is the backlog level of the type of product i at time t,
- ⌊X⌋ is the integer part of X,
- max[X; 0] is the maximum between X and 0, and
- min[X; 0] is the minimum between X and 0;

- at each time, each type of product incurs some inventory costs given by the combination of ordering costs, holding costs and shortage costs for the considered type of product, the ordering costs being the costs associated with the ordering of the considered type of product, the holding costs being the costs associated with storing inventory that remains unused, the shortage costs being the costs when demands exceeds the available inventory for the considered type of product, the reward function of each cluster depending on the inventory costs of each type of product of said cluster;

- when an overflow occurs for a cluster, the overflow weights affected to the replenishment quantity of each type of product of the cluster are chosen so as to favor the replenishment of the types of products associated with the largest shortage costs among the types of products with low inventory level;

- the reward function of each cluster is given by the following formula:

$$R_t^{(k)} = \frac{1}{N_k} \sum_{i \in N_k} r_t^{(i)}$$

where:

- $R_t^{(k)}$ is the reward function for cluster k at time t,
- $r_t^{(i)} = -C_t^{(i)}, r_t^{(i)}$ being the reward function for the type of product i at time t and $C_t^{(i)}$ being the inventory costs for the type of product i at time t, and
- $N_k$ being the number of different types of products of cluster k;

- the inventory costs of each type of product at each time is given by the following formula:

$$C_t^{(i)} = \alpha_O a_t^{(i)} C_O^{(i)} + \alpha_H x_t^{(i)} C_H^{(i)} + \alpha_S \beta_{t+1}^{(i)} C_S^{(i)}$$

where:

- $C_t^{(i)}$ is the inventory costs for the type of product i at time t,
- $\alpha_O$, $\alpha_H$, $\alpha_S \in [0,1]$ with $\alpha_O + \alpha_H + \alpha_S = 1$, $\alpha_O$, $\alpha_H$, $\alpha_S$ being predefined weighting coefficients,
- $a_t^{(i)}$ is the ordered quantity of the type of product i at time t,
- $x_t^{(i)}$ is the inventory level of the type of product i at time t,
- $\beta_{t+1}^{(i)}$ is the backlog level of the type of product i at time t+1,
- $C_O^{(i)}$ are the ordering costs for the type of product i,
- $C_H^{(i)}$ are the holding costs for the type of product i, and
- $C_S^{(i)}$ are the shortage costs for the type of product i;

- at least a cluster comprises different types of products, the training environment being a multi-agent reinforcement learning environment, each agent corresponding to a different type of product of each cluster;
- in the training database, for each type of product, the demand quantity at each time and the lead-time at each time, are stochastic with stationary distributions, the stationary distributions being determined on the basis of real data;
- during the training step, each agent is trained according to a proximal policy optimization algorithm;
- the method comprises a step of ordering at each time the determined ordered quantity for each type of product of the storage space;
- during the operating step, operating data are memorized so as to carry out continual learning on the control model, the operating data comprising, for each type of product at each considered time, the state, the ordered quantity and the updated state.

The invention also relates to a computer program product comprising a readable information carrier having stored thereon a computer program comprising program instructions, the computer program being loadable onto a data processing unit and causing at least the obtaining step, the training step and the operating step of a method as previously described to be carried out when the computer program is carried out on the data processing unit.

The invention also relates to a readable information carrier on which is stored a computer program product as previously described.

BRIEF DESCRIPTION OF THE DRAWINGS

The invention will be easier to understand in view of the following description, provided solely as an example and with reference to the appended drawings in which:

- Figure 1 is a schematic view of an example of a computer for implementing a method for inventory management,
- Figure 2 is a flowchart of an example of implementation of a method for inventory management, and
- Figure 3 is a schematic representation illustrating an example of the interactions between a control model and a training environment during a training step of a method for inventory management.

DETAILED DESCRIPTION OF SOME EMBODIMENTS

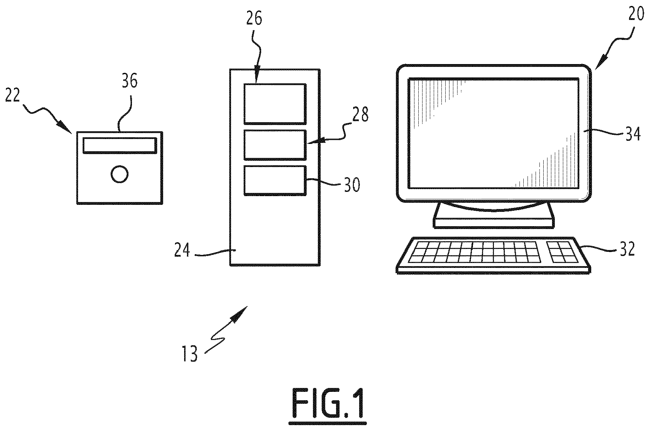

An example of a calculator 20 and of a computer program product 22 are illustrated on figure 1.

The calculator 20 is preferably a computer.

More generally, the calculator 20 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 20 interacts with the computer program product 22.

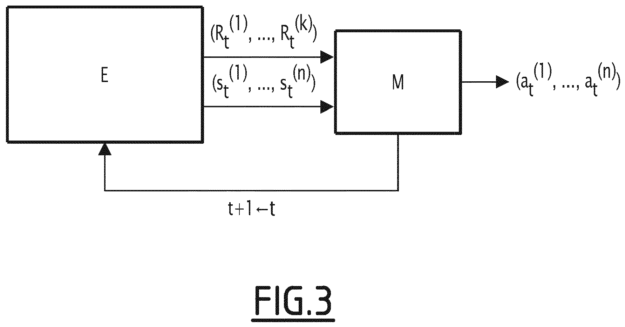

As illustrated on figure 1, the calculator 20 comprises a processor 24 comprising a data processing unit 26, memories 28 and a reader 30 for information media. In the example illustrated on figure 3, the calculator 20 comprises a human machine interface 32, such as a keyboard, and a display 34.

The computer program product 22 comprises an information medium 36.

The information medium 36 is a medium readable by the calculator 20, usually by the data processing unit 26. The readable information medium 36 is a medium suitable for storing electronic instructions and capable of being coupled to a computer system bus.

By way of example, the information medium 36 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 36 is stored the computer program 22 comprising program instructions.

The computer program 22 is loadable on the data processing unit 26 and is adapted to entail the implementation of a method for inventory management, when the computer program 22 is loaded on the processing unit 26 of the calculator 20.

In a variant, the calculator 20 is in communication with a distant server on which the computer program is stored.

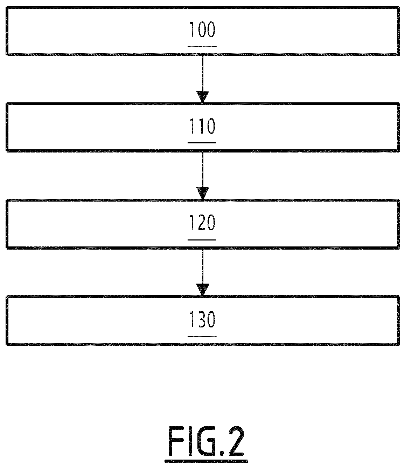

A method for inventory management of different types of products in a storage space, will now be described with reference to figures 2 and 3.

A number N = {1,...,n} of different types of products is considered in this method, where i ∈ N refers to the ith type of product in the inventory and n is the total number of different types of products.

The different types of product are for example industrial components, such as fixations means (bolts, screws...) or replacement parts (hoses). The storage space is for example the space defined by shelves in a room.

The different types of product are classified into M different clusters corresponding to different storage subspaces of the storage space (for example, different sections of shelves). A number M = {1,...,m} of different clusters is considered in this method, where k ∈ M refers to the kth cluster and m is the total number of clusters.

Each cluster k comprises at least one type of product. The types of products associated with one cluster k share a same storage subspace. When each cluster comprises only one type of product, the number of clusters m is equal to the number n of different types of products.

Preferably, the classification of the different types of products in clusters depends on at least one of the following parameter among: the size of the types of products, the weight of the types of products and the specific climatic conditions of the types of products, such as temperature, pressure, humidity levels, ventilation and light.

Each storage subspace has a maximum storage capacity $\Lambda^{(k)}$. The maximum storage capacity $\Lambda^{(k)}$ is the maximum quantity of products corresponding to the cluster k that could be stored in the storage subspace of such a cluster k.

Each type of product i is associated with a state $s_t^{(i)}$ at each time t. The state $s_t^{(i)}$ of each type of product i is modified at each time t by an action consisting in ordering a quantity $a_t^{(i)}$ of said type of product i. Each ordered quantity $a_t^{(i)}$ is received after a lead-time $T_t^{(i)}$.

Each state $s_t^{(i)}$ of a type of product i comprises at least an inventory level $x_t^{(i)}$ and a demand quantity $\delta_t^{(i)}$.

The inventory level $x_t^{(i)}$ is the on-hand inventory of the considered type of product i at time t, i.e., the quantity of products sitting on the shelves in the inventory.

The demand quantity $\delta_t^{(i)}$ is the quantity of the considered type of product i in demand. The demand quantity $\delta_t^{(i)}$ corresponds to a stochastic demand.

Preferably, each state $s_t^{(i)}$ of a type of product i also comprises a backlog level $\beta_t^{(i)}$ and a replenishment quantity $\rho_t^{(i)}$.

The backlog level $\beta_t^{(i)}$ is an unavailable quantity of the considered type of product i when demand exceeds the available inventory level.

The replenishment quantity $\rho_t^{(i)}$ is a quantity of the considered type of product i that will be added to the inventory level when the inventory check is done at the next time t+1. In other words, the replenishment quantity $\rho_t^{(i)}$ is the associated quantity of products which is on its way to the inventory. The replenishment quantity $\rho_t^{(i)}$ depends on the previous ordered quantity $a_1^{(i)}$, ..., $a_t^{(i)}$ for said type of product i and their corresponding lead-time $\tau_1^{(i)}$),..., $\tau_t^{(i)}$. Indeed, the received quantity of product i at time t corresponds to all the previous orders $a_j^{(i)}$ made at time step j such that the receiving time (j+ $\tau_j$) obtained by adding the associated lead-time matches the current time step t, i.e. for i = 1,...,n, $\rho_t^{(i)} = \sum_{j=1}^{t} a_j^{(i)} \cdot I_{\{j+\tau_j^{(i)}=t\}}$ where the function I is equal to 1 when $j + \tau_j^{(i)} = t$, and is equal to 0 otherwise.

The inventory management method comprises a step 100 of obtaining a training database. The obtaining step 100 is, for example, implemented by the calculator 20 interacting with the computer program product 22, that is to say is computer-implemented.

The training database comprises, for each type of product i:

- an initial inventory level $x_0^{(i)}$,
- a demand quantity $\delta_t^{(i)}$ for each time t, and
- a lead-time $\tau_t^{(i)}$ associated to an ordered quantity $a_t^{(i)}$ at said time t.

It is noted that the initial backlog level $\beta_0^{(i)}$ is considered being equal to zero.

Preferably, the demand quantity $\delta_t^{(i)}$ at each time t and the lead-time $\tau_t^{(i)}$ at each time t, are stochastic with stationary distributions. Preferably, the stationary distributions have been determined on the basis of real data.

The inventory management method comprises a step 110 of training a control model M. The training step 110 is, for example, implemented by the calculator 20 interacting with the computer program product 22, that is to say is computer-implemented.

The obtained trained model M is a control model M suitable to be used for inventory management of different types of products in a storage space. The obtained trained model M is preferably specific to the different types of products and to the storage space for which the model M has been trained. Eventually, the control model M extends to categories of types of products having the same features than the types of products for which the model M has been trained and/or to categories of storage space having the same features than the storage space for which the model M has been trained.

The control model M is trained for determining at each time t an ordered quantity $a_t^{(i)}$ (output) for each type of product i depending on the state $s_t^{(i)}$ of each type of product i (input).

The control model M to be trained interacts with an environment E according to the principle of deep reinforcement learning. The model M to be trained is, for example, a neural network.

More precisely, the control model M is trained in a training environment E on the basis of the training database so as to maximize a reward function $R_t^{(k)}$ for each cluster k. The training environment is a reinforcement learning environment with an agent for each type of product i.

Preferably, when at least a cluster comprises different types of products, the training environment E is a multi-agent reinforcement learning environment (MARL), each agent corresponding to a different type of product of each cluster.

Preferably, each agent is trained according to a proximal policy optimization algorithm (PPO).

As illustrated on figure 3, during training, the model M to be trained is suitable for determining actions $a_t^{(1)}, ..., a_t^{(n)}$ in response to states $s_t^{(1)}, ..., s_t^{(n)}$ generated by a training environment E for each type of product i of the storage space. The actions $a_t^{(1)}, ..., a_t^{(n)}$ generated by the model M are suitable to be processed by the environment E. The training environment E calculates a reward function for each cluster $R_t^{(1)}, ..., R_t^{(m)}$ and generates the resulting next states $s_{t+1}^{1}, ..., s_{t+1}^{n}$. The model M is then trained on the basis of data comprising the states $s_t^{(1)}, ..., s_t^{(n)}$, the determined actions $a_t^{(1)}, ..., a_t^{(n)}$ and the corresponding rewards $R_t^{(1)}, ..., R_t^{(m)}$. The training of the model M is, for example, carried out according to a Q-learning algorithm (value based) or a policy-based algorithm. The training is, for example, done on an ongoing basis (for each time step) or later.

The reward function $R_t^{(k)}$ for each cluster k is relative to inventory costs.

More precisely, at each time t, each type of product i incurs some inventory costs $C_t^{(i)}$. The reward function $R_t^k$

of each cluster k depends on the inventory costs $C_t^{(i)}$ of each type of product i of said cluster k.

Preferably, the inventory costs $C_t^{(i)}$ of each type of product i is given by the combination of:

- ordering costs $C_O^{(i)}$ for the considered type of product i. The ordering costs $C_O^{(i)}$ are the costs associated with the ordering of the considered type of product i. For example, in the case of an ordering setting, these costs comprise the functioning costs, reception and tests costs, the salaries of the personnel, information systems costs and customs costs. In the case of a production setting, these costs comprise the raw material costs, labor costs, fixed and variable overheads, e.g.rent of a factory or the energy consumption allocated for production.
- holding costs $C_H^{(i)}$ for the considered type of product i. The holding costs $C_H^{(i)}$ are the costs associated with storing inventory that remains unused. The holding costs $C_H^{(i)}$ may be divided into two categories: financial and functional costs. The former represent the financial interest of the money invested in procuring the stocked products. The latter comprises the rent and maintenance of the required space, insurance costs, equipment costs, inter-warehouses transportation and obsolescence costs.
- shortage costs $C_S^{(i)}$ for the considered type of product i. The shortage costs $C_S^{(i)}$ are the costs when demands exceeds the available inventory for the considered type of product i. For example, the related costs fall in one of the two following categories: lost sales costs and backlogging costs. When considering lost sales, the unsatisfied demands are completely lost whereas with backlogging costs, there is a penalty shortage cost. Note that in the case where the stock is internal, the inventory shortage will induce the stop of production and therefore all the consequent costs.

Preferably, the inventory costs $C_t^{(i)}$ of each type of product i at each time t is given by the following formula:

$$C_t^{(i)} = \alpha_O a_t^{(i)} C_O^{(i)} + \alpha_H x_t^{(i)} C_H^{(i)} + \alpha_S \beta_{t+1}^{(i)} C_S^{(i)}$$

where:

- $C_t^{(i)}$ is the inventory costs for the type of product i at time t,
- $\alpha_O,\ \alpha_H,\ \alpha_S \in [0,1]$ with $\alpha_O + \alpha_H + \alpha_S = 1$, $\alpha_O,\ \alpha_H,\ \alpha_S$ being predefined weighting coefficients (translating some expert's knowledge about the desired training strategy),
- $a_t^{(i)}$ is the ordered quantity of the type of product i at time t,
- $x_t^{(i)}$ is the inventory level of the type of product i at time t,
- $\beta_{t+1}^{(i)}$ is the backlog level of the type of product i at time t+1,
- $C_O^{(i)}$ are the ordering costs for the type of product i,
- $C_H^{(i)}$ are the holding costs for the type of product i, and
- $C_S^{(i)}$ are the shortage costs for the type of product i.

The corresponding reward function $r_t^{(i)}$ for each type of product i is the opposite of the corresponding inventory costs $C_t^{(i)}$, given by the following formula:

$$r_t^{(i)} = -C_t^{(i)}$$

Preferably, the reward function $R_t^k$ of each cluster k is given by the following formula:

$$R_t^{(k)} = \frac{1}{N_k} \sum_{i \in N_k} r_t^{(i)}$$

where:

- $R_t^{(k)}$ is the reward function for cluster k at time t,

- $r_t^{(i)} = -C_t^{(i)}, r_t^{(i)}$ being the reward function for the type of product i at time t and $C_t^{(i)}$ being the inventory costs for the type of product i at time t, and

- $N_k$ being the number of different types of products of cluster k.

Hence, for the cluster(s) comprising only one type of product i, the reward function $R_t^k$ of the cluster corresponds to the reward function $r_t^{(i)}$ for the only type of product i of the cluster.

Considering the above reward functions, it appears clearly that the goal is to train each agent to order low quantities of products that are costly to stock and supply, while maintaining sufficient inventory levels to avoid stockouts for critical products associated to large shortage costs.

Preferably, the inventory level $x_{t+1}^{(i)}$ for each type of product i at the next time t+1 is computed as a function of the corresponding previous inventory level $x_t^{(i)}$, of the corresponding previous demand quantity $\delta_t^{(i)}$, and of the corresponding previous replenishment quantity $\rho_t^{(i)}$.

Preferably, the backlog level $\beta_{t+1}^{(i)}$ for each type of product i at the next time t+1 is computed as a function of the corresponding previous backlog level $\beta_t^{(i)}$, of the corresponding previous inventory level $x_t^{(i)}$, of the corresponding previous demand quantity $\delta_t^{(i)}$ and of the corresponding previous replenishment quantity $\rho_t^{(i)}$.

More precisely, in a preferred embodiment, a temporary inventory level $\lambda_t^{(i)}$ is calculated at each time t, for each type of product i, as a function of the replenishment quantity $\rho_t^{(i)}$ at said time t and of the inventory level $x_t^{(i)}$ at said time t. Preferably, the temporary inventory level $\lambda_t^{(i)}$ at time t is the sum of the replenishment quantity $\rho_t^{(i)}$ at said time t and of the inventory level $x_t^{(i)}$ at said time t.

In this preferred embodiment, for each cluster k, when the sum of the temporary inventory levels $\lambda_t^{(i)}$ of all the corresponding types of products of the cluster k is superior to the maximum storage capacity $\Lambda^{(k)}$ of said cluster k, this incurs a storage overflow. An overflow weight $w_t^{(i)}$ is then affected to the replenishment quantity $\rho_t^{(i)}$ of each type of product i during computation of the inventory level $x_{t+1}^{(i)}$ at the next time t+1 and during computation of the backlog level $\beta_{t+1}^{(i)}$ at the next time t+1. Preferably, the replenishment quantities $\rho_t^{(i)}$ are weighted so as to completely fill the available storage space, i.e., some overflow weights are chosen such that:

$$\sum_{i \in N_k} w_t^{(i)} \cdot \rho_t^{(i)} = \Delta_t^{(k)}$$

Where :

- $w_t^{(i)}$ is an overflow weight for the type of product i at time t,

- $\rho_t^{(i)}$ is the replenishment quantity of the type of product i at time t,

- $N_k$ is the number of different types of products of cluster k, and

- $\Delta_t^{(k)} = \Lambda^{(k)} - \sum_{i \in N_k} x_t^{(i)}$, with $\Lambda^{(k)}$ the maximum storage capacity for cluster k, and $x_t^{(i)}$ the inventory level of the type of product i at time t.

It should be noted that it is supposed that all the types of products of a cluster have the same volume. However, it is also possible to take into account the specific volume of each type of product i. In this case, $\sum_{i \in N_k} x_t^{(i)}$ is replaced by $\sum_{i \in N_k} x_t^{(i)} \cdot v^{(i)}$ in the above formula, with $v^{(i)}$ the volume of the type of product i.

In this preferred embodiment, the inventory level $x_{t+1}^{(i)}$ and the backlog level $\beta_{t+1}^{(i)}$ for each type of product i at the next time t+1 are given by the following formula:

$$x_{t+1}^{(i)} = \max[(x_t^{(i)} + \lfloor w_t^{(i)} \rho_t^{(i)} \rfloor - \delta_t^{(i)}) \, ; 0]$$

$$\beta_{t+1}^{(i)} = \beta_t^{(i)} - \min[(x_t^{(i)} + \left\lfloor w_t^{(i)} \rho_t^{(i)} \right\rfloor - \delta_t^{(i)}) ; 0]$$

Where:

- $x_{t+1}^{(i)}$ is the inventory level of the type of product i at time t+1,
- $x_t^{(i)}$ is the inventory level of the type of product i at time t,
- $w_t^{(i)}$ is the overflow weight affected to the replenishment quantity $\rho_t^{(i)}$,
- $\rho_t^{(i)}$ is the replenishment quantity of the type of product i at time t,
- $\delta_t^{(i)}$ is the demand quantity of the type of product i at time t,
- $\beta_{t+1}^{(i)}$ is the backlog level of the type of product i at time t+1,
- $\beta_t^{(i)}$ is the backlog level of the type of product i at time t,
- $\lfloor X \rfloor$ is the integer part of X,
- max[X; 0] is the maximum between X and 0, and
- min[X; 0] is the minimum between X and 0.

Preferably, when an overflow occurs for a cluster k, the overflow weights $w_t^{(i)}$ affected to the replenishment quantity $\rho_t^{(i)}$ of each type of product i of the cluster k are chosen so as to favor the replenishment of the types of products associated with the largest shortage costs $C_S^{(i)}$ among the types of products with low inventory level.

The inventory management method comprises a step 120 of operating the control model M in order to determine at each time t an ordered quantity $a_t^{(i)}$ for each type of product i of the storage space, following the reception by the control model M, of the current state $s_t^{(i)}$ of each type of product i. The operating step 120 is, for example, implemented by the calculator 20 interacting with the computer program product 22, that is to say is computer-implemented.

During the operating step, the inventory level $x_{t+1}^{(i)}$ and the backlog level $\beta_{t+1}^{(i)}$ for each type of product i at the next time t+1, is computed the same way as during the training step.

Preferably, during the operating step, operating data are memorized so as to carry out continual learning on the control model M. The operating data comprises, for each type of product i at each considered time t, the state $s_t^{(i)}$, the ordered quantity $a_t^{(i)}$ and the updated state $s_{t+1}^{(i)}$.

The inventory management method comprises a step 130 of ordering at each time t the determined ordered quantity $a_t^{(i)}$ for each type of product i of the storage space. The ordering step 130 is, for example, implemented by the calculator 20 interacting with the computer, in an automatic way. In a variant, the ordering step is carried out with the intervention of an operator.

Hence, the inventory management method uses reinforcement learning to address the inventory management problem with stochastic demands and lead-times for real-world applications, such as a multiproduct supply chain on a production line. This enables to perform the inventory management of products in a more precise way to reduce the inventory costs.

In an embodiment, the method also addresses through clusters the joint replenishment problem, i.e. when one considers the inter-dependency among different groups of products in a same order provided by a single supplier. The objective is to optimize a global replenishment cost composed of inventory ordering and holding costs but also to avoid stock-outs of items.

The person skilled in the art will understand that the embodiments and variants described above can be combined to form new embodiments provided that they are technically compatible.

EXPERIMENTAL EXAMPLES OF IMPLEMENTATION OF THE METHOD

This section is dedicated to numerical experiments on real data. We shall consider various scenarios regarding the capacity constraints of the warehouses: (i) when the items in a product cluster have their own capacity constraints then it is enough to train a single reinforcement learning (RL) agent and apply the resulting behavior to all the items in that cluster; (ii) when the items compete for storage space then we may apply some MARL algorithm to deal with the interdependency of items.

*Stochastic Model*

The demands and lead-times are assumed to be stochastic with stationary distributions. The lead-times follow geometric distributions and the demands follow a mixed law of Poisson process with zero plateaus. More precisely, for each item i, the lead-time is given by $\tau^{(i)} \sim G(p_i)$ with parameter $p_i \in (0,1)$ and the demand distribution is given by :

$$\delta^{(i)} = \begin{cases} P(\mu_i) \text{ with probability } b_i \\ 0 \text{ with probability } 1 - b_i \end{cases}$$

In other words, the demand process of item i is equal to $\delta^{(i)} \sim X_i Y_i$ with $X_i \sim B(b_i)$ and $Y_i \sim P(\mu_i)$ with B the function corresponding to Bernoulli law and P the function corresponding to Poisson law.

*Real data*

The data comes from a company with warehouses in different countries. The data is used to find the model parameters of the stochastic distributions using some maximum likelihood estimators. Consider a fixed item $i \in N$ with historical data of demands $(\delta_t^{(i)})_{t=1,...,N_i}$ . The model parameters $b_i$ and $\mu_i$ of the demands are estimated using the MLE estimators $\widehat{b_i}$ and $\widehat{\mu_i}$ defined as the empirical averages : $\widehat{b_i} = \frac{1}{N_i} \sum_{t=1}^{N_i} I_{\{\delta_t^{(i)}>0\}}$ and $\widehat{\mu_i} = \frac{\sum_{t=1}^{N_i} \delta_t^{(i)} . I_{\{\delta_t^{(i)}>0\}}}{\sum_{t=1}^{N_i} I_{\{\delta_t^{(i)}>0\}}}$ , where the function I is equal to 1 when $\delta_t^{(i)} > 0$ , and is equal to 0 otherwise.

Similarly, using a data history of lead-times $(\tau_t^{(i)})_{t=1,...,T_i}$ the model parameter $p_i$ is estimated using $\widehat{p_i}$ defined by :

$$\hat{p}_i = \frac{T_i}{\sum_{t=1}^{T_i} \tau_t^{(i)}}$$

For the case study, the total number of products is equal to n = 50 with time steps equal to months. The history is ranging from 2002 to 2021 on different warehouses leading to a maximum number of historical data points equal to Nmax = 420. The horizon is set to T = 240 months and the methods are tested over 100 replications (independent random seeds).

*Agent battle*

In order to evaluate the performance of the developed approach, different baselines are implemented along with the reinforcement learning methods.

• MinMax agents: a standard min-max strategy (s,S) from operation research. For these agents, each item has a safety stock $K = \phi^{-1}(\alpha)\sqrt{\mu_\tau \sigma_\delta^2 + \mu_\delta \sigma_\tau^2}$ , where $\phi$ is the cumulative distribution function of the standard normal law N(0,1), $\alpha \in \{0.90, 0.95, 0.99\}$ represents the target service level and $\mu, \sigma^2$ are the mean and variance of the demands and lead-times. The value of the service level is set to the classical value $\alpha$ = 0.90 and the means (E) and variances (Var) are computed using the MLE estimators and the closed form formulas:

$$E[\delta^{(i)}] = E[X_i Y_i] = b_i \mu_i \text{ and } Var[\delta^{(i)}] = Var[X_i Y_i] = b_i \mu_i + b_i(1 - b_i)\mu_i^2$$

As soon as the inventory level goes below the safety stock, the controller orders the maximum capacity of the corresponding item. Note that such approach is easy to implement but may fail to anticipate spikes in the demand signal.

• <u>Oracle agents</u>: such agents implement the following heuristic: given the knowledge of the mean $\mu_\delta$ and variance $\sigma_\delta^2$ of the demand signal, it is natural to order, at each timestep, according to a random law with mean $\mu_\delta$ and variance $\sigma_\delta^2$. More precisely, the oracle agents have access to the estimated mean $\widehat{\mu_\delta}$ and standard deviation $\widehat{\sigma_\delta}$ of their associated products and order at each time according to a normal law $N(\widehat{\mu_\delta}, \widehat{\sigma_\delta^2})$ which is clamped to fit the bounds of the action space.

• <u>MARL agents</u>: The reinforcement learning agents are trained using Proximal Policy Optimization (PPO) algorithms which is stable and effective policy gradient methods. When working with capacity constraints per item, both discrete and continuous policies are considered, denoted by PPO-D and PPO-C respectively. When the items compete for storage space, we implement IPPO which is an independent version of PPO for multi-agent frameworks.

*Results*

In the idea that similar items among a cluster share some intrinsic features, we first raise the question of generalization for a single agent. For that matter, we consider a first scenario with a cluster of 5 items with their own capacity constraints and a single RL agent trained on an average item, i.e., we train a "virtual" item whose features are given by taking the mean of the features of all the items in that cluster. Then we test the learned behavior on the 5 items of the cluster and report the different cumulative costs. Table 1 hereinafter presents the average cumulative costs in $ obtained over 100 replications of the different methods for the 5 items over an horizon of T = 240 months.

| ID | MinMax | Oracle | PPO-D | PPO-C |
|---|---|---|---|---|
| 0 | 48,554,986 | 10,183,088 | 4,863,202 | **4,616,016** |
| 1 | 52,993,931 | 16,917,389 | 6,865,991 | **6,385,378** |
| 2 | 70,467,282 | 21,426,806 | 8,727,215 | **8,087,258** |
| 3 | 72,220,832 | 12,722,887 | 9,854,047 | **5,280,345** |
| 4 | 79,235,272 | 16,976,630 | 8,801,628 | **4,808,191** |

Regarding the average cumulative costs, the clear winners are the RL-based methods. Indeed, the PPO methods are statistically better than the two other baselines with a cost reduction factor ranging from 8 (for item ID=1) to 16 (for item ID=4) compared to the standard (s,S) strategy. Interestingly, among the PPO methods, the one with continuous actions presents the best performance.

Another important result concerns the general behavior of the different methods regarding the number of items shortages. Table 2 hereinafter presents the average item shortages obtained over 100 replications of the different methods for the 5 items over an horizon of T = 240 months. Observe that, also for this criterion, the RL-based methods outperform the two standard baselines. Furthermore, the PPO agents learned an optimal strategy in terms of stock-outs since the number of item shortages is always equal to zero.

| ID | 0 | 1 | 2 | 3 | 4 |
|---|---|---|---|---|---|
| MinMax | 39 | 41 | 42 | 51 | 49 |
| Oracle | 10 | 11 | 13 | 8 | 10 |
| PPO-D | 0 | 0 | 0 | 0 | 0 |
| PPO-C | 0 | 0 | 0 | 0 | 0 |

Another scenario involving storage capacity constraint is considered. In this case, we consider three different clusters $N_1$, $N_2$ and $N_3$ composed of 5,10 and 20 items respectively. Similarly to the single agent case, we compare the different methods based on two criteria, namely the average cumulative cost over a cluster and the average item shortages over a cluster over an horizon of T = 240 months.

The table hereinafter shows the average cumulative cost over the different items, obtained over 100 replications and an horizon of T = 240 months.

| Cluster | $N_1$ | $N_2$ | $N_3$ |
|---------|-------|-------|-------|
| MinMax | 49,219,195 | 55,148,027 | 63,319,299 |
| Oracle | 29,596,024 | 31,047,144 | 38,002,027 |
| IPPO-C | **12,048,666** | **7,905,165** | **14,239,567** |

The table hereinafter shows the average stock-outs over the different items, obtained over 100 replications and an horizon of T = 240 months.

| Cluster | $N_1$ | $N_2$ | $N_3$ |
|---------|-------|-------|-------|
| MinMax | 18 | 18 | 23 |
| Oracle | 13 | 9 | 11 |
| IPPO-C | **3** | **0** | **2** |

Once again, the MARL-based agents present the best performance, both in terms of cost savings and avoidance of shortages. Observe that for cluster N1, the MARL agents allows an overall cost reduction of 75% compared to the standard (s,S) strategy, 85% for cluster N2 and about 78% for cluster N3.

**Claims**

1. A method for inventory management of different types of products in a storage space, the types of products being classified into M different clusters corresponding to different storage subspaces of the storage space, each cluster (k) comprising at least one type of product (i), each storage subspace having a maximum storage capacity ($\Lambda^{(k)}$), each type of product (i) being associated with a state ($s_t^{(i)}$) at each time (t), the state ($s_t^{(i)}$) of each type of product (i) being modified at each time (t) by an action consisting in ordering a quantity ($a_t^{(i)}$) of said type of product (i), each ordered quantity ($a_t^{(i)}$) being received after a lead-time ($\tau_t^{(i)}$), each state ($s_t^{(i)}$) of a type of product (i) comprising at least an inventory level ($x_t^{(i)}$) and a demand quantity ($\delta_t^{(i)}$), the inventory level ($x_t^{(i)}$) being the on-hand inventory of the considered type of product (i) at time (t), the demand quantity ($\delta_t^{(i)}$) being the quantity of the considered type of product (i) in demand, the method comprising the following steps which are computer-implemented:

   - obtaining a training database comprising, for each type of product (i), an initial inventory level ($x_0^i$), a demand quantity ($\delta_t^{(i)}$) for each time (t) and a lead-time ($\tau_t^{(i)}$) associated to an ordered quantity ($a_t^{(i)}$) at said time (t),
   - training a control model (M) for determining at each time (t) an ordered quantity ($a_t^{(i)}$) for each type of product (i) depending on the state ($s_t^{(i)}$) of each type of product (i), the control model (M) being trained in a training environment (E) on the basis of the training database so as to maximize a reward function ($R_t^{(k)}$) for each cluster (k), the training environment being a reinforcement learning environment with an agent for each type of product (i), each reward function being relative to inventory costs, and
   - operating the control model (M) in order to determine at each time (t) an ordered quantity ($a_t^{(i)}$) for each type of product (i) of the storage space, following the reception by the control model (M), of the current state ($s_t^{(i)}$) of each type of product (i).

2. A method according to claim 1, wherein each state ($s_t^{(i)}$) of a type of product (i) comprises also a backlog level ($\beta_t^{(i)}$) and a replenishment quantity ($\rho_t^{(i)}$), the backlog level ($\beta_t^{(i)}$) being an unavailable quantity of the considered type of product (i) when demand exceeds the available inventory level, the replenishment quantity ($\rho_t^{(i)}$) being a quantity of the considered type of product (i) that will be added to the inventory level when the inventory check is done at the next time (t+1), the replenishment quantity ($\rho_t^{(i)}$) depending on the previous ordered quantity ($a_1^{(i)}, ..., a_t^{(i)}$) for said type of product (i) and their corresponding lead-time ($\tau_1^{(i)}$),..., $\tau_t^{(i)}$).

3. A method according to claim 2, wherein during the training step and the operating step, the inventory level ($x_{t+1}^{(i)}$) for each type of product (i) at the next time (t+1) is computed as a function of the corresponding previous inventory level ($x_t^{(i)}$), of the corresponding previous demand quantity ($\delta_t^{(i)}$), and of the corresponding previous replenishment quantity ($\rho_t^{(i)}$), the backlog level ($\beta_{t+1}^{(i)}$) for each type of product (i) at the next time (t+1) being computed as a function of the corresponding previous backlog level ($\beta_t^{(i)}$), of the corresponding previous inventory level ($x_t^{(i)}$), of the corresponding previous demand quantity ($\delta_t^{(i)}$) and of the corresponding previous replenishment quantity ($\rho_t^{(i)}$).

4. A method according to claim 3, wherein during the training step and the operating step, a temporary inventory level ($\lambda_t^{(i)}$) is calculated at each time (t), for each type of product (i), as a function of the replenishment quantity ($\rho_t^{(i)}$) at said time (t) and of the inventory level ($x_t^{(i)}$) at said time (t),
for each cluster (k), when the sum of the temporary inventory levels ($\lambda_t^{(i)}$) of the corresponding types of products is superior to the maximum storage capacity ($\Lambda^{(k)}$) of said cluster (k) which causes a storage overflow, an overflow weight ($w_t^{(i)}$) is affected to the replenishment quantity ($\rho_t^{(i)}$) of each type of product (i) during computation of the inventory level ($x_{t+1}^{(i)}$) at the next time (t+1) and during computation of the backlog level ($\beta_{t+1}^{(i)}$) at the next time (t+1).

5. A method according to claim 4, wherein the inventory level ($x_{t+1}^{(i)}$) and the backlog level ($\beta_{t+1}^{(i)}$) for each type of product (i) at the next time (t+1) are given by the following formula:

$$x_{t+1}^{(i)} = \max[(x_t^{(i)} + \left\lfloor w_t^{(i)} \rho_t^{(i)} \right\rfloor) - \delta_t^{(i)}) ; 0]$$

$$\beta_{t+1}^{(i)} = \beta_t^{(i)} - \min[(x_t^{(i)} + \left\lfloor w_t^{(i)} \rho_t^{(i)} \right\rfloor) - \delta_t^{(i)}) ; 0]$$

Where:

- $x_{t+1}^{(i)}$ is the inventory level of the type of product i at time t+1,
- $x_t^{(i)}$ is the inventory level of the type of product i at time t,
- $w_t^{(i)}$ is the overflow weight affected to the replenishment quantity $\rho_t^{(i)}$,
- $\rho_t^{(i)}$ is the replenishment quantity of the type of product i at time t,
- $\delta_t^{(i)}$ is the demand quantity of the type of product i at time t,
- $\beta_{t+1}^{(i)}$ is the backlog level of the type of product i at time t+1,
- $\beta_t^{(i)}$ is the backlog level of the type of product i at time t,
- $\lfloor X \rfloor$ is the integer part of X,
- max[X; 0] is the maximum between X and 0, and
- min[X; 0] is the minimum between X and 0.

6. A method according to any one of claims 1 to 5, wherein at each time (t), each type of product (i) incurs some inventory costs ($C_t^{(i)}$) given by the combination of ordering costs ($C_O^{(i)}$), holding costs ($C_H^{(i)}$) and shortage costs ($C_S^{(i)}$) for the considered type of product (i), the ordering costs ($C_O^{(i)}$) being the costs associated with the ordering of the considered type of product (i), the holding costs ($C_H^{(i)}$) being the costs associated with storing inventory that remains unused, the shortage costs ($C_S^{(i)}$) being the costs when demands exceeds the available inventory for the considered type of product (i), the reward function ($R_t^k$) of each cluster (k) depending on the inventory costs ($C_t^{(i)}$) of each type of product (i) of said cluster (k).

7. A method according to claim 6 in its dependency with claims 4 or 5, wherein when an overflow occurs for a cluster (k), the overflow weights ($w_t^{(i)}$) affected to the replenishment quantity ($\rho_t^{(i)}$) of each type of product (i) of the cluster (k) are chosen so as to favor the replenishment of the types of products associated with the largest shortage costs ($C_S^{(i)}$) among the types of products with low inventory level ($x_t^{(i)}$).

8. A method according to claim 6 or 7, wherein the reward function ($R_t^k$) of each cluster (k) is given by the following formula:

$$R_t^{(k)} = \frac{1}{N_k} \sum_{i \in N_k} r_t^{(i)}$$

where:

- $R_t^{(k)}$ is the reward function for cluster k at time t,
- $r_t^{(i)} = -C_t^{(i)}$, $r_t^{(i)}$ being the reward function for the type of product i at time t and $C_t^{(i)}$ being the inventory costs for the type of product i at time t, and
- $N_k$ being the number of different types of products of cluster k.

9. A method according to any one of claims 6 to 8, wherein the inventory costs ($C_t^{(i)}$) of each type of product (i) at each time (t) is given by the following formula:

$$C_t^{(i)} = \alpha_O a_t^{(i)} C_O^{(i)} + \alpha_H x_t^{(i)} C_H^{(i)} + \alpha_S \beta_{t+1}^{(i)} C_S^{(i)}$$

where:

- $C_t^{(i)}$ is the inventory costs for the type of product i at time t,
- $\alpha_O$, $\alpha_H$, $\alpha_S \in [0,1]$ with $\alpha_O + \alpha_H + \alpha_S = 1$, $\alpha_O$, $\alpha_H$, $\alpha_S$ being predefined weighting coefficients,
- $a_t^{(i)}$ is the ordered quantity of the type of product i at time t,
- $x_t^{(i)}$ is the inventory level of the type of product i at time t,
- $\beta_{t+1}^{(i)}$ is the backlog level of the type of product i at time t+1,
- $C_O^{(i)}$ are the ordering costs for the type of product i,
- $C_H^{(i)}$ are the holding costs for the type of product i, and
- $C_S^{(i)}$ are the shortage costs for the type of product i.

10. A method according to any one of claims 1 to 9, wherein at least a cluster comprises different types of products, the training environment (E) being a multi-agent reinforcement learning environment, each agent corresponding to a different type of product of each cluster.

11. A method according to any one of claims 1 to 10, wherein, in the training database, for each type of product (i), the demand quantity ($\delta_t^{(i)}$) at each time (t) and the lead-time ($\tau_t^{(i)}$) at each time (t), are stochastic with stationary distributions, the stationary distributions being determined on the basis of real data.

12. A method according to any one of claims 1 to 11, wherein during the training step, each agent is trained according to a proximal policy optimization algorithm.

13. A method according to any one of claims 1 to 12, wherein the method comprises a step of ordering at each time (t) the determined ordered quantity ($a_t^{(i)}$) for each type of product (i) of the storage space.

14. A method according to any one of claims 1 to 13, wherein during the operating step, operating data are memorized so as to carry out continual learning on the control model (M), the operating data comprising, for each type of product (i) at each considered time (t), the state ($s_t^{(i)}$), the ordered quantity ($a_t^{(i)}$) and the updated state ($s_{t+1}^{(i)}$).

15. A computer program product comprising a readable information carrier having stored thereon a computer program comprising program instructions, the computer program being loadable onto a data processing unit and causing at least the obtaining step, the training step and the operating step of a method according to any one of claims 1 to 14 to be carried out when the computer program is carried out on the data processing unit.

## FIG.1

**FIG.2**

$$(R_t^{(1)}, ..., R_t^{(k)})$$

$$(s_t^{(1)}, ..., s_t^{(n)})$$

$$(a_t^{(1)}, ..., a_t^{(n)})$$

$$t+1 \leftarrow t$$

## FIG.3

Europäisches
Patentamt

European
Patent Office

Office européen
des brevets

# EUROPEAN SEARCH REPORT

Application Number

EP 22 30 5356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 757 915 A1 (TATA CONSULTANCY SERVICES LTD [IN]) 30 December 2020 (2020-12-30) * paragraphs [0002], [0005] – [0008], [0020], [0024] * | 1-15 | INV.<br>G06Q10/08 |

TECHNICAL FIELDS
SEARCHED      (IPC)

G06Q

The present search report has been drawn up for all claims

| Place of search | Date of completion of the search | Examiner |
|---|---|---|
| Munich | 18 May 2022 | Breidenich, Markus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 30 5356

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2022

| Patent document cited in search report | | Publication date | Patent family member(s) | | Publication date |
|---|---|---|---|---|---|
| EP  3757915 | A1 | 30-12-2020 | EP | 3757915 A1 | 30-12-2020 |
|  |  |  | US | 2021035250 A1 | 04-02-2021 |

EPO FORM P0459

For more details about this annex : see Official Journal of the European Patent Office, No. 12/82